(19) Europäisches Patentamt
European Patent Office
Office européen des brevets

(11) **EP 2 748 625 B1**

(12) **FASCICULE DE BREVET EUROPEEN**

(45) Date de publication et mention
de la délivrance du brevet:
**13.01.2016 Bulletin 2016/02**

(51) Int Cl.:
*G01S 5/00* (2006.01)   *G05D 1/02* (2006.01)

(21) Numéro de dépôt: **12750378.7**

(86) Numéro de dépôt international:
**PCT/EP2012/066332**

(22) Date de dépôt: **22.08.2012**

(87) Numéro de publication internationale:
**WO 2013/026872 (28.02.2013 Gazette 2013/09)**

(54) **MÉTHODE DE LOCALISATION D'UN OBJET AU MOYEN D'UNE GRILLE DE RÉFÉRENCE**

VERFAHREN ZUR ORTUNG EINES OBJEKTS ANHAND EINES REFERENZGITTERS

METHOD FOR LOCATING AN OBJECT USING A REFERENCE GRID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.08.2011 FR 1157487**

(43) Date de publication de la demande:
**02.07.2014 Bulletin 2014/27**

(73) Titulaire: **Commissariat à l'Énergie Atomique et aux Énergies Alternatives
75015 Paris (FR)**

(72) Inventeur: **VILLIEN, Christophe
38170 SEYSSINET-PARISET (FR)**

(74) Mandataire: **Ahner, Philippe et al
BREVALEX
95, rue d'Amsterdam
75378 Paris Cedex 8 (FR)**

(56) Documents cités:
**WO-A1-99/59112    KR-A- 20110 010 422**

• **PHILIP MÄCHLER: "robot positioning by supervised and unsupervised odometry correction", PHD THESIS , 1998, XP002677238, Lausanne Extrait de l'Internet: URL:http://www.cs.cmu.edu/~biorobotics/pap ers/sbp_papers/integrated2/machler_odometr y.pdf**

**Description**

DOMAINE TECHNIQUE

La présente invention concerne de manière générale le domaine de la localisation et plus particulièrement celui de la localisation à l'intérieur de bâtiments (localisation dite *indoor*). La méthode de localisation selon l'invention s'applique notamment à la localisation de chariots de supermarché.

ÉTAT DE LA TECHNIQUE **ANTÉRIEURE**

La localisation *indoor* est un champ de recherche spécifique en raison de l'absence de signaux de radiolocalisation satellitaire à l'intérieur des bâtiments. De nombreuses solutions originales ont été proposées dans la littérature et certaines ont donné lieu à des réalisations.

Parmi les solutions proposées, on peut notamment citer celles faisant appel à des mesures de puissance de bornes Wi-Fi, celles faisant appel à des émetteurs UWB (*Ultra Wide Band*) ou encore celles faisant appel à des techniques inertielles.

La localisation indoor à partir de bornes Wi-Fi suppose une densité de déploiement suffisante de telles bornes, condition qui n'est pas toujours remplie en pratique. Elle souffre également d'une précision insuffisante.

Les techniques de radiolocalisation UWB, avec ou sans hybridation satellitaire, sont relativement coûteuses dans la mesure où elles nécessitent le déploiement d'émetteurs spécifiques.

La localisation à l'aide de systèmes inertiels (par exemple à l'aide de gyroscopes MEMS) est sujette à des dérives rapides dans le temps et nécessite par conséquent des recalages fréquents.

Une méthode de localisation d'un chariot de supermarché a été proposée dans la demande WO-A-9959112. Le chariot est équipé d'une étiquette RFID qui peut être détectée par des matrices de détecteurs disposés dans le sol. Cette méthode de localisation suppose toutefois une infrastructure très lourde.

Une méthode de localisation d'un robot a été décrite dans la demande de brevet KR-A-20110010422. Le robot est équipé d'une caméra dirigée vers le haut et filmant le plafond pendant que le robot se déplace. Le plafond est pourvu d'un arrangement bidimensionnel de lignes orthogonales formant une grille. Cette grille est constituée de lignes, dites horizontales, espacées d'une distance $L_x$, et de lignes, dites verticales, espacées d'une distance $L_y$. Les distances $L_x$ et $L_y$ sont supposées connues.

Les images prises par la caméra sont traitées en temps réel et la position du robot est déterminée en fonction du franchissement des lignes de la grille. Plus précisément, à chaque fois que le centre de l'image coupe une ligne de la grille, les coordonnées du robot sont mises à jour comme suit :

$$x_i = x_{i-1} + k_x L_x$$
$$y_i = y_{i-1} + k_y L_y$$

$$(1)$$

où $(x_i, y_i)$ sont les coordonnées du robot dans un plan horizontal lors de la $i^{ème}$ coupure de ligne, et $k_x, k_y$ prennent leurs valeurs parmi le triplet {-1,0,1} comme expliqué plus loin. On suppose que les coordonnées sont définies par rapport à une origine O dans le plan horizontal et que les lignes horizontales (resp. verticales) du plafond sont parallèles à l'axe Ox (resp. Oy).

Les valeurs de $k_x, k_y$ sont définies comme suit :

$k_x = 1$ (resp. $k_y = 1$) si le centre de l'image coupe une ligne horizontale (resp. une ligne verticale) dans le sens des x (resp. des y) croissants ;
$k_x = 0$ (resp. $k_y = 0$) si le centre de l'image ne coupe pas une ligne horizontale (resp. verticale) ;
$k_x = -1$ (resp. $k_y = -1$) si le centre de l'image coupe une ligne horizontale (resp. une ligne verticale) dans le sens des x (resp. des y) décroissants.

La Fig. 1 représente le principe de la méthode de localisation décrite dans la demande de brevet précitée.

L'image prise par la caméra est représentée par un carré plein 110, superposé à la grille de référence 100. La grille est constituée de lignes horizontales, 101, et de lignes verticales, 102.

Le centre de l'image, indiqué par le point P, définit conventionnellement la position courante du robot. On note $\alpha_i$ l'angle entre la direction du mouvement du robot et la ligne coupée (horizontale ou verticale) par le point P lors de la $i^{eme}$ coupure. Si l'on note $\varphi_i$ le cap du robot par rapport à l'axe Ox, celui-ci peut être déterminé à partir de l'angle $a_i$ selon les différentes situations de coupure possibles :

a) $k_x$ = 1 et $k_y$ = 0, c'est-à-dire si le point $P$ coupe une ligne horizontale dans le sens des x croissants : $\varphi_i = \alpha_i$ ;

b) $k_x$ = -1 et $k_y$ = 0, c'est-à-dire si le point $P$ coupe une ligne horizontale dans le sens des x croissants : $\varphi_i = -\alpha_i$ ;

c) $k_x$ = 0 et $k_y$ = 1, c'est-à-dire si le point $P$ coupe une ligne verticale dans le sens des y croissants : $\varphi_i = \pi/2 - \alpha_i$ ;

d) $k_x$ = 0 et $k_y$ = -1, c'est-à-dire si le point $P$ coupe une ligne verticale dans le sens des y décroissants : $\varphi_i = 3\pi/2 - \alpha_i$.

A chaque coupure d'une ligne, le robot sélectionne parmi les hypothèses (a) à (d), celle qui minimise la variation de l'orientation entre deux coupures successives, autrement dit l'écart angulaire $|\varphi_i - \varphi_{i-1}|$. On déduit les valeurs de $k_x, k_y$ correspondant à ce minimum et l'on met à jour les coordonnées du robot au moyen de l'expression (1).

Cette méthode de localisation présente toutefois un certain nombre d'inconvénients. Tout d'abord, elle requiert un équipement coûteux et des traitements d'image complexes. Ensuite, et surtout, elle peut conduire à des résultats catastrophiques en cas de virage rapide (rotation de plus de 90°) voire de marche arrière du robot. En effet, dans ce cas, la condition de minimisation de l'écart angulaire $|\varphi_i - \varphi_{i-1}|$ entre deux coupures successives n'est pas pertinente. Etant donné qu'il n'est pas possible de distinguer une coupure d'une ligne horizontale d'une coupure d'une ligne verticale, l'ensemble de la trajectoire ultérieure est affectée d'une erreur d'au moins 90°.

Le but de la présente invention est par conséquent de proposer une méthode de localisation au moyen d'une gille de référence qui soit particulièrement simple et robuste.

## EXPOSÉ DE L'INVENTION

La présente invention est définie par une méthode de localisation d'un objet au moyen d'une grille de référence, l'objet se mouvant dans un plan parallèle à ou confondu avec celui de la grille, ladite grille étant définie par une pluralité de lignes, dites horizontales, alignées selon une première direction et une pluralité de lignes, dites verticales, alignées selon une seconde direction distincte de la première, les lignes verticales étant séparées d'une première distance dans le sens de la première direction et les lignes horizontales étant séparées par une seconde distance dans le sens de la seconde direction. Selon cette méthode, à chaque fois que l'objet coupe une ligne de la grille,

- on détermine le cap de l'objet par rapport à une direction de référence ;
- on obtient, en fonction du cap ainsi déterminé, les probabilités $p(dy_i|\varphi_i)$, $p(dx_i|\varphi_i)$ que la ligne ainsi coupée soit respectivement une ligne horizontale et une ligne verticale de la grille, lorsque l'objet se déplace dans la direction donnée par le cap ;
- on estime, à partir desdites probabilités et des première et seconde distances, le déplacement ($\widehat{dx_i}$, $\widehat{dy_i}$) de l'objet depuis la dernière fois où il a coupé une ligne de la grille ; et
- on met à jour la position de l'objet à partir du déplacement ainsi estimé.

Dans une application classique, les première et seconde directions sont orthogonales.

Si la première direction est choisie comme ladite direction de référence, la probabilité $p(dx_i|\varphi_i)$ que la ligne coupée soit une ligne verticale est déterminée par $p(dx_i|\varphi_i) = \dfrac{\tan(\theta)}{\tan(\theta) + |\tan(\varphi_i)|}$ et la probabilité $p(dy_i|\varphi_i)$ que

$\tan(\theta) + |\tan(\varphi_i)|$ la ligne coupée soit une ligne horizontale est déterminée par $p(dy_i|\varphi_i) = \dfrac{|\tan(\varphi_i)|}{\tan(\theta) + |\tan(\varphi_i)|}$,

où $\tan(\theta) = L_y/L_x$, $L_x$ et $L_y$ étant respectivement les première et seconde distances et $\varphi_i$ étant le cap.

Le déplacement de l'objet est alors estimé au moyen de $\widehat{dx_i} = \text{sgn}(\cos\varphi_i)\, p(dx_i|\varphi_i)\, L_x$ et $\widehat{dy_i} = \text{sgn}(\sin\varphi_i)\, p(dy_i|\varphi_i)\, L_y$ où sgn(.) est la fonction signe et $\varphi_i$ est le cap.

La position ($\widehat{x_i}$, $\widehat{y_i}$) de l'objet peut être mise à jour selon $\widehat{x_i} = \widehat{x_{i-1}} + \widehat{dx_i}$ et $\widehat{y_i} = \widehat{y_{i-1}} + \widehat{dy_i}$ où ($\widehat{x_{i-1}}$, $\widehat{y_{i-1}}$) est la position de l'objet obtenue la dernière fois que l'objet a coupé une ligne de la grille et ($\widehat{dx_i}$, $\widehat{dy_i}$) est le déplacement estimé depuis cette dernière fois.

Typiquement, l'objet est équipé d'un premier capteur adapté à détecter une coupure d'une ligne de la grille. Ce premier capteur peut être un capteur optique ou un accéléromètre.

L'objet peut comporter en outre des moyens de mesure de cap comprenant un second capteur adapté à fournir l'orientation de l'objet et un troisième capteur adapté à donner le sens de son déplacement.

Le second capteur peut être un magnétomètre ou un gyroscope.

Le troisième capteur peut être du même type que le premier et être disposé sur l'objet à proximité du premier capteur, l'ordre de détection d'une coupure de la ligne par les premier et troisième capteurs fournissant le sens de déplacement.

Le troisième capteur peut être un capteur Doppler.

Lorsque l'objet est équipé de roues, le troisième capteur peut être adapté à fournir le sens de rotation desdites roues.

Dans une application de l'invention, l'objet est un chariot de supermarché.

## BRÈVE DESCRIPTION DES DESSINS

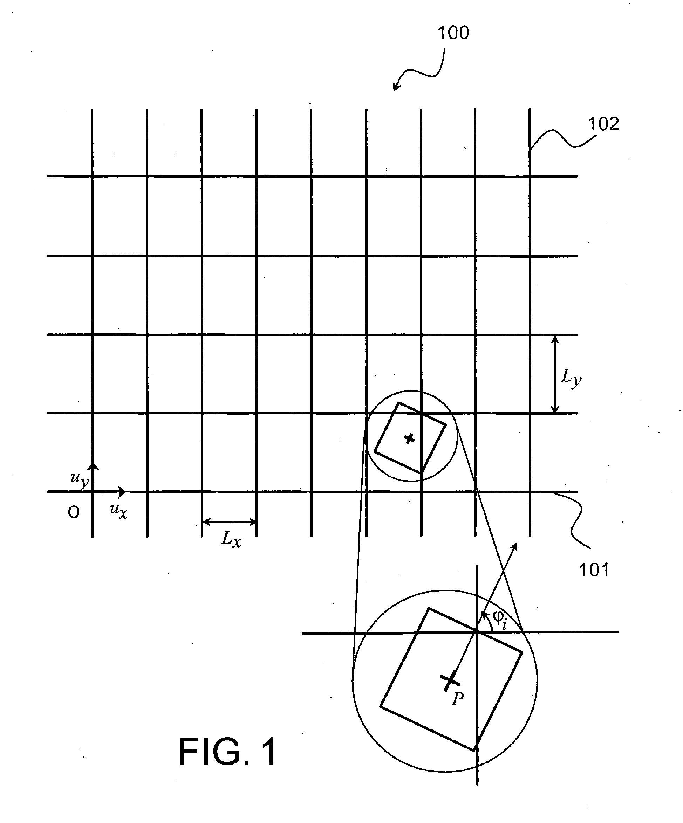

La Fig. 1 représente le principe d'une méthode de localisation à l'aide d'une grille de référence connue de l'art antérieur ;

La Fig. 2 représente l'organigramme de la méthode de localisation selon un mode de réalisation de la présente invention ;

La Fig. 3A représente la trajectoire d'un objet obtenue grâce à la méthode de localisation selon le mode de réalisation de la Fig. 2, en absence de bruit angulaire et de fausse détection de coupure ;

La Fig. 3B représente la trajectoire de l'objet au moyen de la même méthode de localisation mais dans des conditions dégradées.

## EXPOSÉ DÉTAILLÉ DE MODES DE RÉALISATION PARTICULIERS

Nous considérons à nouveau le problème de la localisation d'un objet à l'aide d'une grille de référence.

Par localisation, on entend ici la détermination de la position de l'objet et plus précisément la détermination des coordonnées de cet objet dans un repère bidimensionnel. Ce repère bidimensionnel définit le plan dans lequel l'objet se meut. Le plan dont il s'agit peut être celui de la grille de référence ou bien un plan qui lui est parallèle. La méthode de localisation selon l'invention couvre le cas où la position est déterminée par l'objet lui-même (en toute rigueur la méthode est alors une méthode de « positionnement ») et le cas où cette position est déterminée par un système extérieur à l'objet (méthode de localisation au sens strict). Le terme de localisation est entendu ici dans son acception générale et couvre l'un et l'autre cas.

L'objet peut être *a priori* quelconque, par exemple un robot industriel, un chariot de supermarché, un véhicule autonome. La grille de référence peut être dans ce cas disposée sur le sol ou sur le plafond d'un bâtiment. Dans un autre contexte d'application, l'objet peut être un stylo, un crayon optique, une souris optique ou autre. La grille de référence est alors disposée sur un support tel qu'une feuille de papier ou une tablette graphique.

La grille de référence peut également être réalisée de multiples manières. Dans le premier type d'application mentionné plus haut, elle peut résulter d'un dallage sur le sol ou du dallage d'un faux-plafond. Dans le second type d'application, elle peut être obtenue au moyen d'une impression sur le support ou bien d'un affichage (écran LCD par exemple).

Dans tous les cas, l'objet est pourvu d'un premier capteur capable de détecter les lignes formant la grille. Ce capteur peut être optique, la détection de la coupure d'une ligne étant alors obtenue par exemple au moyen d'un changement de niveau de gris ou de couleur au centre de l'image. Alternativement, ce capteur peut être un accéléromètre ou un capteur de choc lorsque les lignes de la grille sont formées en relief ou en creux (cas d'un dallage sur le sol ou d'une trame sur un support), la ligne étant détectée au moyen de la secousse engendrée lorsque l'objet la franchit. Ce capteur peut encore être inductif lorsque la grille est constituée d'un réseau de conducteurs enfouis ou présents dans le sol. On comprendra que de manière générale, le type de capteur sera fonction du type de grille de référence que l'on utilise.

La grille de référence est constituée d'un ensemble de lignes, dites horizontales, alignées selon une première direction et d'un second ensemble de lignes, dites verticales, alignées selon une seconde direction, distincte de la première. Les lignes verticales sont espacées d'une distance $L_x$ dans le sens de la première direction et les lignes horizontales sont espacées d'une distance $L_y$ dans le sens de la seconde direction. Les première et seconde directions sont de préférence orthogonales. On considérera dans la suite le repère $(O, u_x, u_y)$ où l'origine O est située dans le plan dans lequel se meut l'objet et $u_x, u_y$ sont les vecteurs unitaires respectivement dirigés dans la première et la seconde directions.

L'objet est en outre équipé de moyens de mesure de cap permettant de déterminer la direction de déplacement de l'objet dans le repère en question. Ces moyens peuvent comprendre un second capteur capable de déterminer l'orientation de l'objet ainsi qu'un troisième capteur donnant le sens de son déplacement. A. noter que ce troisième capteur est optionnel si l'objet ne peut se déplacer que dans un seul sens (marche avant seule par exemple).

Le second capteur peut être constitué par un magnétomètre (donnant l'orientation de l'objet par rapport au champ magnétique terrestre ou un champ magnétique artificiel), un gyroscope, une caméra adaptée à détecter des repères visuels dans un bâtiment, un réseau d'antennes adapté à détecter l'angle d'arrivée d'un signal émis par une balise, etc.

Le troisième capteur peut être réalisé par exemple par un capteur de rotation de roues lorsque l'objet en est équipé, un capteur Doppler ou encore un accéléromètre. Avantageusement, le troisième capteur sera identique au premier et situé à proximité de celui-ci, le sens de déplacement étant alors déterminé par l'ordre dans lequel la coupure de ligne est détectée par les premier et troisième capteurs.

Les second et troisième capteurs peuvent être prévus en plusieurs exemplaires et leurs sorties respectives moyennées de manière à améliorer le rapport signal sur bruit de la mesure de cap.

D'autres modes de réalisation des moyens de mesure de cap pourront être envisagés par l'homme du métier sans pour autant sortir du cadre de la présente invention.

La méthode de localisation selon l'invention se fonde sur une approche probabiliste des coupures de lignes de la grille de référence, à partir d'une connaissance préalable de la direction de déplacement de l'objet.

L'originalité de cette méthode consiste à ne pas rechercher, à chaque coupure de ligne, si la ligne coupée est horizontale ou verticale (approche déterministe) mais à tirer parti du grand nombre de lignes coupées par un segment de la trajectoire de l'objet.

Plus précisément, si l'on suppose que la $i^{ème}$ coupure de ligne vient d'être détectée et si l'on note $p(dx_i|\varphi_i)$, resp. $p(dy_i|\varphi_i)$, la probabilité conditionnelle que la ligne coupée est verticale, resp. horizontale, sachant que la direction de déplacement fait un angle $\varphi_i$ avec l'axe Ox (c'est-à-dire avec la première direction), on a les relations suivantes :

$$p(dx_i|\varphi_i) + p(dy_i|\varphi_i) = 1$$

$$\frac{p(dy_i|\varphi_i)}{p(dx_i|\varphi_i)} = \frac{\lambda_x(\varphi_i)}{\lambda_y(\varphi_i)} \qquad (2)$$

où $\lambda_x(\varphi_i)$, $\lambda_y(\varphi_i)$ sont respectivement les densités de lignes horizontales et verticales lorsque l'objet se déplace dans la direction de déplacement. L'axe de déplacement est noté $\Delta(\varphi_i)$.

Lorsque les lignes verticales et horizontales sont orthogonales, on peut montrer que le rapport des densités peut s'exprimer simplement par :

$$\frac{\lambda_x(\varphi_i)}{\lambda_y(\varphi_i)} = \frac{\tan(\varphi_i)/L_y}{1/L_x} = \frac{L_x\tan(\varphi_i)}{L_y} = \frac{\tan(\varphi_i)}{\tan(\theta)} \qquad (3)$$

avec $\tan(\theta) = \dfrac{L_y}{L_x}$ .

L'expression (3) se comprend intuitivement puisque si l'objet se déplace selon l'axe $\Delta(\varphi_i)$ de $(\Delta_x, \Delta_x \tan(\varphi_i))$ dans le repère $(O, u_x, u_y)$, le nombre moyen de lignes verticales coupées lors de ce déplacement sera de $\Delta_x/L_x$ alors que le nombre moyen de lignes horizontales coupées lors de ce même déplacement sera de $\Delta_x \tan(\varphi_i)/L_y$.

Si l'on suppose que $0 \leq \varphi_i < \pi/2$, le déplacement entre deux coupures de ligne peut être estimé par :

$$\widehat{dx_i} = p(dx_i|\varphi_i)L_x$$

$$\widehat{dy_i} = p(dy_i|\varphi_i)L_y \qquad (4)$$

soit, compte tenu de (2) et (3) :

$$\widehat{dx_i} = \frac{\tan(\theta)}{\tan(\theta) + \tan(\varphi_i)} L_x = \frac{L_y}{L_y + L_x \tan(\varphi_i)} L_x$$

$$\widehat{dy_i} = \frac{\tan(\varphi_i)}{\tan(\theta) + \tan(\varphi_i)} L_y = \frac{L_x \tan(\varphi_i)}{L_y + L_x \tan(\varphi_i)} L_y \qquad (5)$$

Si l'on définit les fonctions $f_x$ et $f_y$ respectivement par :

$$f_x(\varphi_i) = p(dx_i|\varphi_i) = \frac{\tan(\theta)}{\tan(\theta) + |\tan(\varphi_i)|} \qquad (6)$$

$$f_y(\varphi_i) = p(dy_i|\varphi_i) = \frac{|\tan(\varphi_i)|}{\tan(\theta) + |\tan(\varphi_i)|} \qquad (7)$$

on estime le déplacement ( $\widehat{dx_i}$ , $\widehat{dy_i}$ ) de l'objet pour les différentes plages de $\varphi_i$ comme suit :

- $0 \leq \varphi_i < \pi/2$

$$\widehat{dx_i} = f_x(\varphi_i)L_x \quad ; \quad \widehat{dy_i} = f_y(\varphi_i)L_y \qquad (8)$$

- $\pi/2 \leq \varphi_i < \pi$

$$\widehat{dx_i} = -f_x(\varphi_i)L_x \quad ; \quad \widehat{dy_i} = f_y(\varphi_i)L_y \qquad (9)$$

- $-\pi \leq \varphi_i < -\pi/2$

$$\widehat{dx_i} = -f_x(\varphi_i)L_x \quad ; \quad \widehat{dy_i} = -f_y(\varphi_i)L_y \qquad (10)$$

- $-\pi/2 \leq \varphi_i < 0$

$$\widehat{dx_i} = f_x(\varphi_i)L_x \quad ; \quad \widehat{dy_i} = -f_y(\varphi_i)L_y \qquad (11)$$

Dans tous les cas, on notera que le déplacement de l'objet est donné par $\widehat{dx_i} = \mathrm{sgn}(\cos\varphi_i) f_x(\varphi_i)L_x$ et $\widehat{dy_i} = \mathrm{sgn}(\sin\varphi_i) f_y(\varphi_i)L_y$ où sgn(.) est la fonction signe (égale à -1 pour un nombre négatif et égale à +1 pour un nombre positif).

La position ( $\widehat{x_i}$ , $\widehat{y_i}$ ) de l'objet dans le repère (O,$u_x$,$u_y$) lors de la détection de la $i^{ème}$ coupure est alors estimée au moyen de :

$$\hat{x}_i = \hat{x_{i-1}} + \hat{dx_i}$$

$$\hat{y_i} = \hat{y_{i-1}} + \hat{dy_i} \qquad\qquad (12)$$

où ( $\hat{x_{i-1}}$ , $\hat{y_{i-1}}$ ) était la position de l'objet estimée lors de la coupure précédente.

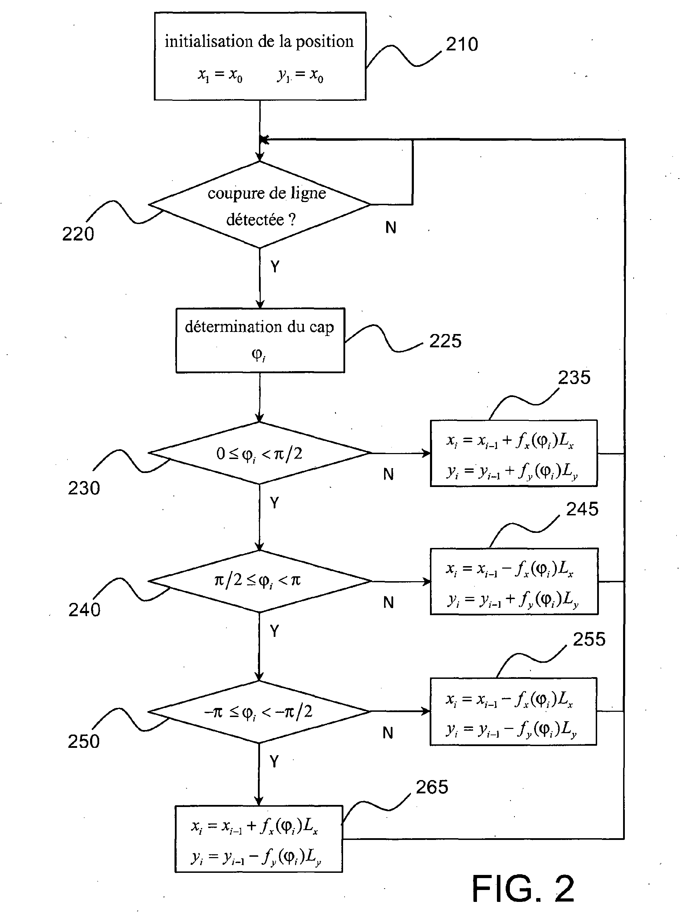

La Fig. 2 représente l'organigramme de la méthode de localisation selon un mode de réalisation de l'invention.
La grille de référence est définie par les vecteurs $u_x$ et $u_y$ donnant respectivement les première et seconde directions, ainsi que par les distances $L_x$ et $L_y$, au sens défini plus haut. Les distances $L_x$ et $L_y$ sont supposées connues.

A l'étape 210, la position de l'objet est initialisée par $\hat{x_1} = x_0$ , $\hat{y_1} = y_0$ . En pratique, cette étape d'initialisation pourra être déclenchée lors du passage de l'objet en un point prédéterminé de position connue (par exemple l'entrée d'un bâtiment). Le passage préalable de l'objet en ce point pourra d'ailleurs conditionner la mise en oeuvre de la méthode de localisation.
Lorsqu'une coupure de ligne est détectée à l'aide du premier capteur, en 220, on détermine en 225 la direction de déplacement de l'objet à l'aide des moyens de mesure de cap. Cette direction est définie conventionnellement par l'angle $\varphi_i$ qu' elle forme avec la première direction.
On détermine ensuite dans quelle plage angulaire se trouve la direction de déplacement.
Si, en 230, l'angle $\varphi_i$ est tel que $0 \leq \varphi_i < \pi/2$, autrement dit si l'objet se déplace dans le sens des $x$ positifs et celui des $y$ positifs, la position de l'objet est mise à jour en 235 au moyen des expressions (8) et (12), soit :

$$\hat{x_i} = \hat{x_{i-1}} + f_x(\varphi_i)L_x$$

$$\hat{y_i} = \hat{y_{i-1}} + f_y(\varphi_i)L_y \qquad\qquad (13)$$

A défaut, la méthode se poursuit en 240.
Si en 240, l'angle $\varphi_i$ est tel que $\pi/2 \leq \varphi_i < \pi$, autrement dit si l'objet se déplace dans le sens des x négatifs et celui des $y$ positifs, la position de l'objet est mise à jour en 245 au moyen des expressions (9) et (12), soit :

$$\hat{x_i} = \hat{x_{i-1}} - f_x(\varphi_i)L_x$$

$$\hat{y_i} = \hat{y_{i-1}} + f_y(\varphi_i)L_y \qquad\qquad (14)$$

A défaut la méthode se poursuit en 250.
Si, en 250, l'angle $\varphi_i$ est tel que $-\pi \leq \varphi_i < -\pi/2$, autrement dit si l'objet se déplace dans le sens des x négatifs et celui des $y$ négatifs, la position de l'objet est mise à jour en 255 au moyen des expressions (10) et (12), soit :

$$\hat{x_i} = \hat{x_{i-1}} - f_x(\varphi_i)L_x$$

$$\hat{y_i} = \hat{y_{i-1}} - f_y(\varphi_i)L_y \qquad\qquad (15)$$

A défaut, l'angle $\varphi_i$ est tel que $-\pi/2 \leq \varphi_i < 0$, c'est-à-dire que l'objet se déplace dans le sens des x négatifs et celui des $y$ négatifs, la position de l'objet est mise à jour en 265 au moyen des expressions (10) et (12), soit :

$$\widehat{x_i} = \widehat{x_{i-1}} + f_x(\varphi_i)L_x$$

$$\widehat{y_i} = \widehat{y_{i-1}} - f_y(\varphi_i)L_y \qquad\qquad (16)$$

On retourne ensuite à l'étape de détection de coupure en 220.

Les valeurs $f_x(\varphi_i)$, $f_y(\varphi_i)$ ou, le cas échéant, les valeurs $f_x(\varphi_i)L_x$ $f_y(\varphi_i)L_y$ peuvent être stockées dans une table et lues en fonction du cap $\varphi_i$. Alternativement, ces valeurs peuvent être calculées à chaque coupure de ligne.

La méthode de localisation peut comprendre en outre des phases de calibration à des intervalles réguliers ou bien lorsque l'objet passe par une position connue.

Le calcul de la position peut être effectué par un processeur équipant l'objet ou bien à distance par un système extérieur à l'objet. Dans ce dernier cas, l'information de coupure de ligne ainsi que le cap $\varphi_i$ sont transmis par l'objet au système en question.

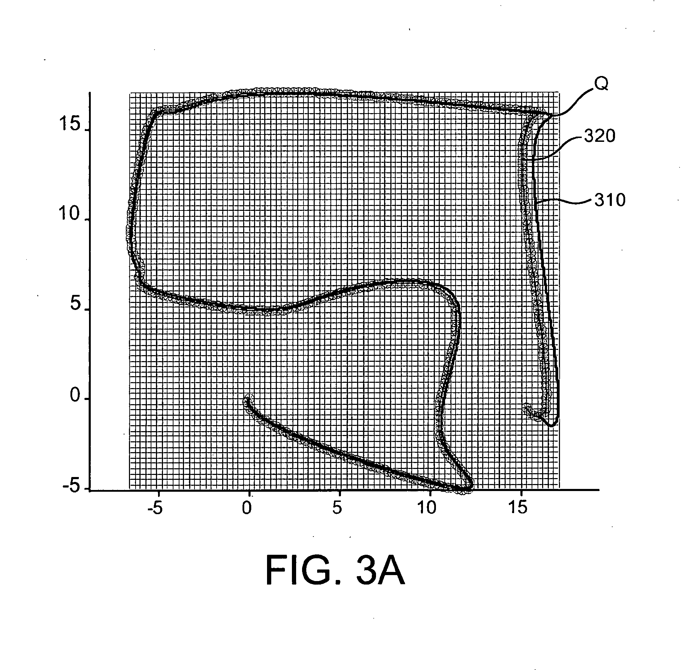

La Fig. 3A représente en trait discontinu la trajectoire réelle, 310, d'un objet se déplaçant par rapport à une grille de référence. La trajectoire estimée au moyen de la méthode de localisation décrite précédemment est représentée en trait continu, 320. On a supposé ici que le cap mesuré était le cap réel de l'objet et que la détection de coupure de ligne n'était pas affectée d'erreurs.

On remarque que la trajectoire estimée est très proche de la trajectoire réelle. Même en cas de virage rapide de l'objet (point de rebroussement Q), la méthode de localisation permet d'obtenir une bonne approximation de la trajectoire réelle, sans apparition d'erreur catastrophique.

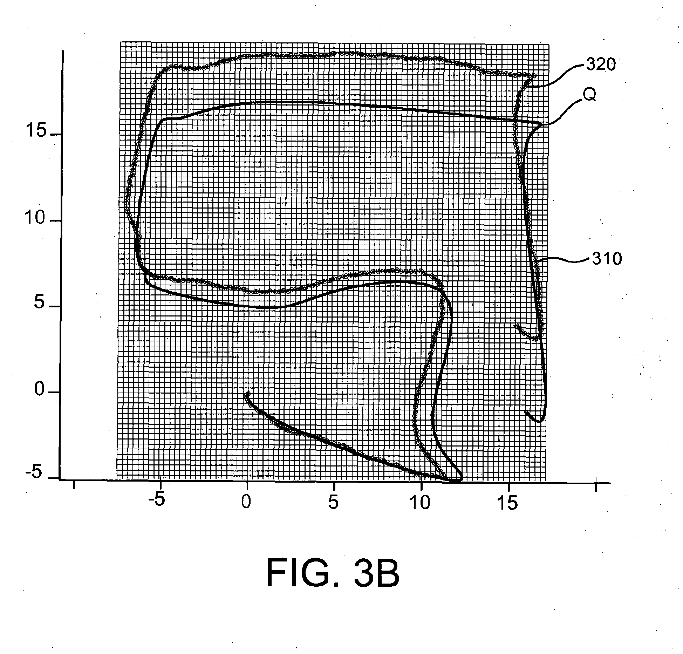

La Fig. 3B représente la trajectoire estimée par la même méthode de localisation mais dans des conditions dégradées. Plus précisément, on a supposé ici que la mesure de cap était affectée d' un bruit angulaire avec un écart-type de 10° et que la détection de coupure de ligne opérait avec un taux de fausse alarme de 14% et un taux de non-détection de 10%. Par fausse alarme, on entend qu'une coupure de ligne est détectée alors qu'elle n'est pas présente et par non-détection on entend que la coupure d'une ligne par l'objet n'est pas détectée.

On remarque qu'en dépit des conditions d'opération dégradées, la méthode de localisation fournit une estimation acceptable de la trajectoire réelle. Elle est par conséquent robuste et ne conduit pas à des erreurs catastrophiques.

## Revendications

1. Méthode de localisation d'un objet au moyen d'une grille de référence, l'objet se mouvant dans un plan parallèle à ou confondu avec celui de la grille, ladite grille étant définie par une pluralité de lignes, dites horizontales, alignées selon une première direction et une pluralité de lignes, dites verticales, alignées selon une seconde direction distincte de la première, les lignes verticales étant séparées d'une première distance ($L_x$) dans le sens de la première direction et les lignes horizontales étant séparées par une seconde distance ($L_y$) dans le sens de la seconde direction, **caractérisée en ce qu'**à chaque fois que l'objet coupe une ligne de la grille,

   - on détermine le cap de l'objet par rapport à une direction de référence ;
   - on obtient, en fonction du cap ainsi déterminé, les probabilités $p(dy_i|\varphi_i)$, $p(dx_i|\varphi_i)$ que la ligne ainsi coupée soit respectivement une ligne horizontale et une ligne verticale de la grille, lorsque l'objet se déplace dans la direction donnée par le cap ;
   - on estime, à partir desdites probabilités et des première et seconde distances, le déplacement ($\widehat{dx_i}$, $\widehat{dy_i}$) de l'objet depuis la dernière fois où il a coupé une ligne de la grille ; et
   - on met à jour la position de l'objet à partir du déplacement ainsi estimé.

2. Méthode de localisation selon la revendication 1, **caractérisée en ce que** les première et seconde directions sont orthogonales.

3. Méthode de localisation selon la revendication 2, **caractérisée en ce que**, la première direction étant choisie comme ladite direction de référence, la probabilité $p(dx_i|\varphi_i)$ que la ligne coupée soit une ligne verticale est déterminée par

$$p(dx_i|\varphi_i) = \frac{\tan(\theta)}{\tan(\theta) + |\tan(\varphi_i)|}$$ et la probabilité $p(dy_i|\varphi_i)$ que la ligne coupée soit une ligne horizontale est

déterminée par $p(dy_i|\varphi_i) = \dfrac{|\tan(\varphi_i)|}{\tan(\theta) + |\tan(\varphi_i)|}$ , où $\tan(\theta) = L_y/L_x$, $L_x$ et $L_y$ étant respectivement les première et seconde distances et $\varphi_i$ étant le cap.

4. Méthode de localisation selon la revendication 2 ou 3, **caractérisée en ce que**, la première direction étant choisie comme ladite direction de référence, le déplacement de l'objet est estimé au moyen de $\widehat{dx_i} = \text{sgn}(\cos\varphi_i)\,p(dx_i|\varphi_i)\,L_x$ et $\widehat{dy_i} = \text{sgn}(\sin\varphi_i)\,p(dy_i|\varphi_i)\,L_y$ où sgn(.) est la fonction signe et $\varphi_i$ est le cap.

5. Méthode de localisation selon l'une quelconque des revendications précédentes, **caractérisée en ce que** la position ( $\widehat{x_i}$ , $\widehat{y_i}$ ) de l'objet est mise à jour selon $\widehat{x_i} = \widehat{x_{i-1}} + \widehat{dx_i}$ et $\widehat{y_i} = \widehat{y_{i-1}} + \widehat{dy_i}$ où ( $\widehat{x_{i-1}}$ , $\widehat{y_{i-1}}$ ) est la position de l'objet obtenue la dernière fois que l'objet a coupé une ligne de la grille et ( $\widehat{dx_i}$ , $\widehat{dy_i}$ ) est le déplacement estimé depuis cette dernière fois.

6. Méthode de localisation selon l'une quelconque des revendications précédentes, **caractérisée en ce que** l'objet est équipé d'un premier capteur adapté à détecter une coupure d'une ligne de la grille.

7. Méthode de localisation selon la revendication 6, **caractérisé en ce que** le premier capteur est un capteur optique.

8. Méthode de localisation selon la revendication 6, **caractérisée en ce que** le premier capteur est un accéléromètre.

9. Méthode de localisation selon la revendication 6, **caractérisée en ce que** l'objet comporte des moyens de mesure de cap comprenant un second capteur adapté à fournir l'orientation de l'objet et un troisième capteur adapté à donner le sens de son déplacement.

10. Méthode de localisation selon la revendication 9, **caractérisée en ce que** le second capteur est un magnétomètre.

11. Méthode de localisation selon la revendication 9, **caractérisée en ce que** le second capteur est un gyroscope.

12. Méthode de localisation selon la revendication 9, **caractérisée en ce que** le troisième capteur est de même type que le premier et est disposé sur l'objet à proximité du premier capteur, l'ordre de détection d'une coupure de la ligne par les premier et troisième capteurs fournissant le sens de déplacement.

13. Méthode de localisation selon la revendication 9, **caractérisée en ce que** le troisième capteur est un capteur Doppler.

14. Méthode de localisation selon la revendication 9, **caractérisée en ce que** l'objet est équipé de roues et que le troisième capteur fournit le sens de rotation desdites roues.

15. Méthode de localisation selon l'une des revendications précédentes, **caractérisée en ce que** ledit objet est un chariot de supermarché.

**Patentansprüche**

1. Verfahren zum Lokalisieren eines Objekts mit Hilfe eines Referenzgitters, wobei sich das Objekt in einer Ebene bewegt, die parallel zu jener des Gitters ist oder mit ihr zusammen fällt, wobei das Gitter definiert ist durch eine Mehrzahl von sogenannten horizontalen Linien, die entlang einer ersten Richtung ausgerichtet sind, und eine Mehrzahl von sogenannten vertikalen Linien, die entlang einer zweiten Richtung ausgerichtet sind, die von der ersten verschieden ist, wobei die vertikalen Linien in der Richtung der ersten Richtung um einen ersten Abstand ($L_x$) separiert sind, und die horizontalen Linien in der Richtung der zweiten Richtung um einen zweiten Abstand ($L_y$) separiert sind, **dadurch gekennzeichnet, dass** jedes Mal dann, wenn das Objekt eine Linie des Gitters schneidet,

- man den Kurs des Objekts bezüglich einer Referenzrichtung bestimmt;

- man als Funktion des derart bestimmten Kurses die Wahrscheinlichkeiten $p(dy_i|\varphi_i)$, $p(dx_i|\varphi_i)$ dafür erhält, dass die derart geschnittene Linie eine horizontale Linie beziehungsweise eine vertikale Linie des Gitters ist, wenn sich das Objekt in der durch den Kurs gegebenen Richtung verlagert;
- man ausgehend von den Wahrscheinlichkeiten und dem ersten und dem zweiten Abstand die Verlagerung $\left(\widehat{dx_i}, \widehat{dy_i}\right)$ des Objekts seit dem letzten Mal abschätzt, als es eine Linie des Gitters geschnitten hat; und
- man die Position des Objekts ausgehend von der derart abgeschätzten Verlagerung aktualisiert.

2. Verfahren zum Lokalisieren nach Anspruch 1, **dadurch gekennzeichnet, dass** die erste und die zweite Richtung zueinander orthogonal sind.

3. Verfahren zum Lokalisieren nach Anspruch 2, **dadurch gekennzeichnet, dass** die erste Richtung als die Referenzrichtung ausgewählt wird, und dass die Wahrscheinlichkeit $p(dx_i|\varphi_i)$ dafür, dass die geschnittene Linie eine vertikale Linie ist, bestimmt wird durch $p(dx_i|\varphi_i) = \dfrac{\tan(\theta)}{\tan(\theta) + |\tan(\varphi_i)|}$ , und dass die Wahrscheinlichkeit $p(dy_i|\varphi_i)$ dafür, dass die geschnittene Linie eine horizontale Linie ist, bestimmt wird durch

$$p(dy_i|\varphi_i) = \frac{|\tan(\varphi_i)|}{\tan(\theta) + |\tan(\varphi_i)|}$$ , wobei $\tan(\theta) = L_y/L_x$, wobei $L_x$ und $L_y$ der erste beziehungsweise der zweite Abstand sind, und $\varphi_i$ der Kurs ist.

4. Verfahren zum Lokalisieren nach Anspruch 2 oder 3, **dadurch gekennzeichnet, dass** die erste Richtung als die Referenzrichtung gewählt wird, und dass die Verlagerung des Objekts abgeschätzt wird mittels $\widehat{dx_i} = sgn\,(\cos\varphi_i)\,p(dx_i|\varphi_i)L_x$ und $\widehat{dy_i} = sgn\,(\sin\varphi_i)\,p(dy_i|\varphi_i)L_y$, wobei *sgn* (.) die Vorzeichenfunktion ist, und $\varphi_i$ der Kurs ist.

5. Verfahren zum Lokalisieren nach einem der vorhergehenden Ansprüche, **dadurch gekennzeichnet, dass** die Position $(\hat{x}_i, \hat{y}_i)$ des Objekts aktualisiert wird mit Hilfe von $\hat{x}_i = \hat{x}_{i-1} + \widehat{dx_i}$ und $\hat{y}_i = \hat{y}_{i-1} + \widehat{dy_i}$, wobei $(\hat{x}_{i-1}, \hat{y}_{i-1})$ die Position des Objekts ist, erhalten beim letzten Mal, als das Objekt eine Zeile des Gitters geschnitten hat, und $\left(\widehat{dx_i}, \widehat{dy_i}\right)$ die seit diesem letzten Mal abgeschätzte Verlagerung ist.

6. Verfahren zum Lokalisieren nach einem der vorhergehenden Ansprüche, **dadurch gekennzeichnet, dass** das Objekt mit einem ersten Sensor ausgestattet ist, der dazu ausgelegt ist, ein Schneiden einer Linie des Gitters zu erfassen.

7. Verfahren zum Lokalisieren nach Anspruch 6, **dadurch gekennzeichnet, dass** der erste Sensor ein optischer Sensor ist.

8. Verfahren zum Lokalisieren nach Anspruch 6, **dadurch gekennzeichnet, dass** der erste Sensor ein Beschleunigungsmesser ist.

9. Verfahren zum Lokalisieren nach Anspruch 6, **dadurch gekennzeichnet, dass** das Objekt Mittel zum Messen des Kurses umfasst, umfassend einen zweiten Sensor, der dazu ausgelegt ist, die Orientierung des Objekts zu liefern, sowie einen dritten Sensor, der dazu ausgelegt ist, die Richtung seiner Verlagerung anzugeben.

10. Verfahren zum Lokalisieren nach Anspruch 9, **dadurch gekennzeichnet, dass** der zweite Sensor ein Magnetometer ist.

11. Verfahren zum Lokalisieren nach Anspruch 9, **dadurch gekennzeichnet, dass** der zweite Sensor ein Gyroskop ist.

12. Verfahren zum Lokalisieren nach Anspruch 9, **dadurch gekennzeichnet, dass** der dritte Sensor vom gleichen Typ ist wie der erste und an dem Objekt in der Nähe des ersten Sensors angeordnet ist, wobei die Reihenfolge der Erfassung eines Schneidens der Linie durch den ersten und den dritten Sensor die Verlagerungsrichtung liefert.

13. Verfahren zum Lokalisieren nach Anspruch 9, **dadurch gekennzeichnet, dass** der dritte Sensor ein Doppler-Sensor ist.

14. Verfahren zum Lokalisieren nach Anspruch 9, **dadurch gekennzeichnet, dass** das Objekt mit Rädern ausgestattet ist, und dass der dritte Sensor die Drehrichtung der Räder liefert.

15. Verfahren zum Lokalisieren nach einem der vorhergehenden Ansprüche, **dadurch gekennzeichnet, dass** das Objekt ein Supermarkt-Einkaufswagen ist.

**Claims**

1. A method for locating an object by means of a reference grid, the object moving in a plane parallel to or identical to that of the grid, said grid being defined by a plurality of so-called horizontal lines, aligned along a first direction and a plurality of so-called vertical lines, aligned along a second direction distinct from the first one, the vertical lines being separated by a first distance ($L_x$) along the first direction and the horizontal lines being separated by a second distance ($L_y$) along the second direction, **characterised in that** each time the object crosses a line of the grid,

   - the heading of the object is determined with respect to a reference direction;
   - as a function of the heading thus determined, the probabilities $p(dy_i|\varphi_i)$, $p(dx_i|\varphi_i)$ of the line thus crossed being respectively a horizontal line and a vertical line of the grid, are obtained when the object moves in the direction given by the course;
   - from said probabilities and the first and second distances, the displacement $\left(\widehat{dx_i}, \widehat{dy_i}\right)$ of the object since the last time it crossed the line of the grid is assessed;
   - the position of the object is updated from the displacement thus assessed.

2. The locating method according to claim 1, **characterised in that** the first and second directions are orthogonal.

3. The locating method according to claim 2, **characterised in that**, the first direction being selected as said reference direction, the probability $p(dx_i|\varphi_i)$ of the crossed line being a vertical line is determined by

$$p(dx_i|\varphi_i) = \frac{\tan(\theta)}{\tan(\theta) + |\tan(\varphi_i)|}$$ and the probability $p(dy_i|\varphi_i)$ of the crossed line being a horizontal line is deter-

mined by $$p(dy_i|\varphi_i) = \frac{|\tan(\varphi_i)|}{\tan(\theta) + |\tan(\varphi_i)|},$$ where $\tan(\theta) = L_y/L_x$, $L_x$ and $L_y$ being respectively the first and second distances and $\varphi_i$ being the heading.

4. The locating method according to claim 2 or 3, **characterised in that**, the first direction being selected as said reference direction, the displacement of the object is assessed by means of $\widehat{dx_i} = sgn(\cos\varphi_i)p(dx_i|\varphi_i)L_x$ and $\widehat{dy_i} = sgn(\sin\varphi_i)\ p(dy_i|\varphi_i)L_y$ where sgn(.) is the signum function and $\varphi_i$ is the heading.

5. The locating method according to any of the preceding claims, **characterised in that** the position $(\hat{x}_i, \hat{y}_i)$ of the object is updated according to $\hat{x}_i = \hat{x}_{i-1} + \widehat{dx_i}$ and $\hat{y}_i = \hat{y}_{i-1} + \widehat{dy_i}$ where $(\hat{x}_{i-1}, \hat{y}_{i-1})$ is the position of the object obtained the last time the object crossed a line of the grid and $\left(\widehat{dx_i}, \widehat{dy_i}\right)$ is the displacement assessed since this last time.

6. The locating method according to any of the preceding claims, **characterised in that** the object is equipped with a first sensor suitable for detecting a line crossing of the grid.

7. The locating method according to claim 6, **characterised in that** the first sensor is an optical sensor.

8.  The locating method according to claim 6, **characterised in that** the first sensor is an accelerometer.

9.  The locating method according to claim 6, **characterised in that** the object includes heading measuring means comprising a second sensor suitable for providing the orientation of the object and a third sensor suitable for giving the direction of its movement.

10. The locating method according to claim 9, **characterised in that** the second sensor is a magnetometer.

11. The locating method according to claim 9, **characterised in that** the second sensor is a gyroscope.

12. The locating method according to claim 9, **characterised in that** the third sensor is of the same type as the first one and is provided on the object in the proximity of the first sensor, the order of detecting the line crossing by the first and third sensors providing the direction of movement.

13. The locating method according to claim 9, **characterised in that** the third sensor is a Doppler sensor.

14. The locating method according to claim 9, **characterised in that** the object is equipped with wheels and the third sensor provides the direction of rotation of said wheels.

15. The locating method according to one of the preceding claims, **characterised in that** said object is a supermarket trolley.

FIG. 1

FIG. 2

FIG. 3A

FIG. 3B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9959112 A
- KR 20110010422 A